# EUROPEAN PATENT APPLICATION

(11) **EP 4 576 554 A1**
(43) Date of publication of application: **25.06.2025**
(21) Application number: 23891306.5
(22) Date of filing: 25.10.2023
(51) Int. Cl.: H02M 7/66, H02J 7/00, H02M 3/00, H02M 3/28, H02M 7/48

(54) **POWER SUPPLY DEVICE**

(30) Priority: 16.11.2022 JP 2022183682
(71) Applicant: AISIN CORPORATION, Kariya-shi, Aichi 448-8650 (JP)
(72) Inventor: IWATA, Imari, Kariya-shi, Aichi 448-8650 (JP); TAKAHASHI, Mitsuru, Kariya-shi, Aichi 448-8650 (JP); ESAKI, Norito, Kariya-shi, Aichi 448-8650 (JP); OGASAWARA, Tomohiro, Kariya-shi, Aichi 448-8650 (JP)
(74) Representative: Kramer Barske Schmidtchen Patentanwälte PartG mbB
(86) International application number: PCT/JP2023/038466
(87) International publication number: WO 2024/106151

(57) **Abstract**

A power supply device includes: an inverter that, in a case where AC power is input, converts the AC power into DC power and outputs the DC power, and in a case where DC power is input, converts the DC power into AC power and outputs the AC power; a converter that allows the DC power from the inverter to be converted into DC power having a DC voltage of a first voltage value with which a battery is chargeable, and allows DC power from the battery to be converted into DC power having a DC voltage of a second voltage value different from the first voltage value; and a switching part that switches conversion operation of the inverter and the converter.

## Description

### TECHNICAL FIELD

The present invention relates to a power supply device that charges and discharges a battery mounted on a vehicle.

### BACKGROUND ART

Conventionally, a vehicle (for example, a hybrid vehicle or an electric vehicle) that travels by electric energy has been used. Some of such vehicles each include a battery that can be charged from an external power supply and supply AC power to an electrical appliance via an outlet provided in the vehicle. As a technique related to a power supply device for charging such a battery, for example, there is a technique described in Patent Literature 1 which is referred to below.

Patent Literature 1 describes a charger for charging a battery. The charger includes a power factor correction circuit (corresponding to an "inverter" of the present application) connected to AC power, a DC conversion circuit (corresponding to a "converter" of the present application) having one end connected to the power factor correction circuit and the other end connected to a battery, and an AC conversion circuit that receives power and outputs AC power. The power factor correction circuit, the DC conversion circuit, and the AC conversion circuit are configured separately.

### CITATION LIST

### PATENT LITERATURE

Patent Literature 1: JP 2017-158322 A

### SUMMARY OF INVENTION

### TECHNICAL PROBLEMS

As described above, in the charger described in Patent Literature 1, the power factor correction circuit, the DC conversion circuit, and the AC conversion circuit are configured separately, which causes an increase in size and an increase in cost.

Therefore, a power supply device that is compact and can be configured at low cost is required.

### SOLUTIONS TO PROBLEMS

A characteristic configuration of a power supply device according to the present invention includes: an inverter that, in a case where AC power is input, converts the AC power into DC power and outputs the DC power, and in a case where DC power is input, converts the DC power into AC power and outputs the AC power; a converter that allows the DC power from the inverter to be converted into DC power having a DC voltage of a first voltage value with which a battery is chargeable, and allows DC power from the battery to be converted into DC power having a DC voltage of a second voltage value different from the first voltage value; and a switching part that switches conversion operation of the inverter and the converter.

With such a characteristic configuration, the battery can be charged by the power supply device via the inverter, and in a case where the battery is not charged, AC power can be output on the basis of the DC power from the battery. Therefore, since the inverter and the converter can be used in combination when the battery is charged and when AC power is output on the basis of the DC power from the battery, the size can be reduced as compared with a case where the inverter and the converter are not used in combination, and it is possible to realize the power supply device at low cost.

### BRIEF DESCRIPTION OF DRAWINGS

FIG. 1 is a circuit diagram in a case where a power supply device is used as a charger.
FIG. 2 is a circuit diagram in a case where the power supply device is used as an AC power output device.
FIG. 3 is a flowchart illustrating processing of the power supply device.

### DESCRIPTION OF EMBODIMENTS

A power supply device according to the present invention is configured to be able to output DC power for charging a battery mounted on a vehicle and output AC power on the basis of power stored in the battery. Hereinafter, a power supply device 1 of the present embodiment will be described.

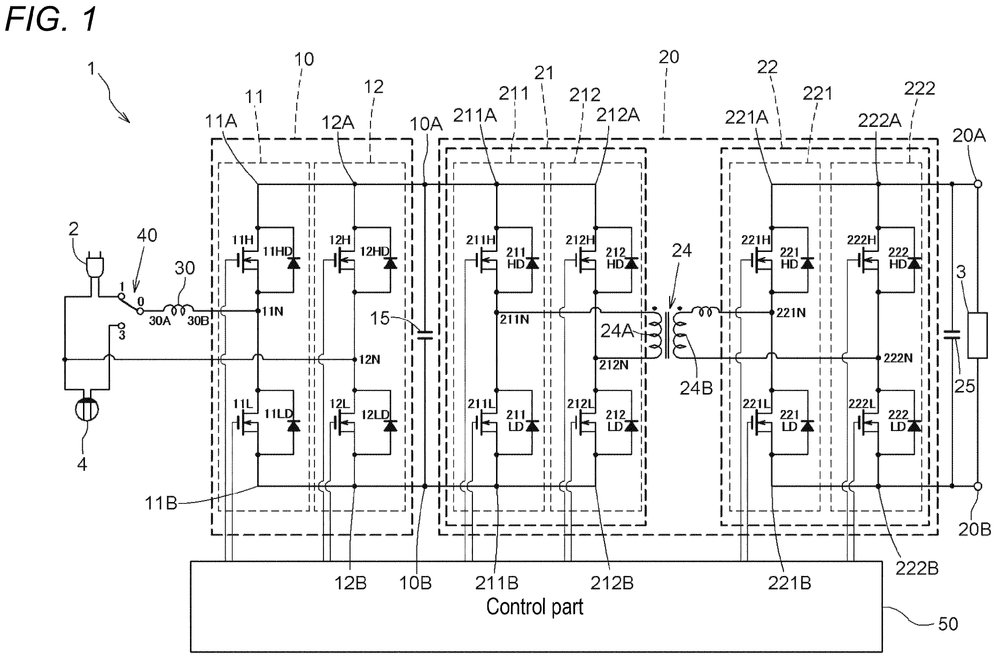

FIG. 1 is a circuit diagram of the power supply device 1. As illustrated in FIG. 1, the power supply device 1 includes an inverter 10, a converter 20, a reactor coil 30, a switching part 40, and a control part 50. Each functional part is constructed by hardware, software, or both with a CPU as a core member in order to perform the processing related to output of DC power and AC power described above.

The inverter 10 converts AC power into DC power and outputs the DC power in a case where the AC power is input, and converts DC power into AC power and outputs the AC power in a case where the DC power is input. That is, there are a case where AC power is input to the inverter 10 of the present embodiment and a case where DC power is input to the inverter 10 of the present embodiment. The AC power input to the inverter 10 refers to power having an AC voltage whose voltage value swings at a predetermined cycle. Specifically, the AC voltage has an amplitude at a commercial frequency (for example, 50 Hz or 60 Hz), and corresponds to an AC voltage of 200 V (effective value) extracted from a commercial power supply supplied in a single-phase three-wire system. The DC power output from the inverter 10 refers to power having a DC voltage of a constant voltage value (excluding a ripple voltage) with respect to a reference voltage. In a case where the AC power having the above-described AC voltage of 200 V is input, the inverter 10 converts the AC power into DC power having a DC voltage and outputs the DC power.

The DC power input to the inverter 10 refers to power having a DC voltage whose voltage value is a constant voltage value (excluding a ripple voltage) with respect to the reference voltage. Specifically, the DC power input to the inverter 10 corresponds to power based on a DC voltage output from a battery 3 mounted on a vehicle. The AC power output from the inverter 10 refers to power having an AC voltage whose voltage value swings at a predetermined cycle. Specifically, the AC power output from the inverter 10 corresponds to AC power having an AC voltage of 100 V (effective value) as an example of an AC voltage having an amplitude at the same frequency as a commercial frequency (for example, 50 Hz or 60 Hz). In a case where the DC power from the battery 3 is input, the inverter 10 converts the DC power into AC power having an AC voltage of 100 V, for example, and outputs the AC power.

The inverter 10 is provided with a pair of terminals 10A and 10B. The inverter 10 outputs the DC power converted from the AC power to the converter 20 described later via the pair of terminals 10A and 10B. In addition, the DC power from the battery 3 is input to the pair of terminals 10A and 10B via the converter 20.

The inverter 10 includes a first leg 11 and a second leg 12. The first leg 11 and the second leg 12 are provided in parallel to the terminals 10A and 10B. As a result, one end portion 11A of the first leg 11 and one end portion 12A of the second leg 12 are connected to the terminal 10A, and the other end portion 11B of the first leg 11 and the other end portion 12B of the second leg 12 are connected to the terminal 10B.

The first leg 11 includes a high-side switching element 11H and a low-side switching element 11L connected in series. In the present embodiment, n-type metal-oxide-semiconductor field-effect transistors (n-type MOS-FETs) are used as the switching element 11H and the switching element 11L. In the switching element 11H, a drain terminal is connected to the end portion 11A, and a source terminal is connected to a drain terminal of the switching element 11L. A source terminal of the switching element 11L is connected to the end portion 11B. A gate terminal of each of the switching element 11H and the switching element 11L is connected to the control part 50. In addition, between the source terminal and the drain terminal of the switching element 11H and between the source terminal and the drain terminal of the switching element 11L, diodes 11HD and 11LD each having an anode terminal connected to the source terminal and a cathode terminal connected to the drain terminal are provided, respectively.

In addition, the second leg 12 includes a high-side switching element 12H and a low-side switching element 12L connected in series. In the present embodiment, n-type MOS-FETs are also used as the switching element 12H and the switching element 12L. In the switching element 12H, a drain terminal is connected to the end portion 12A, and a source terminal is connected to a drain terminal of the switching element 12L. A source terminal of the switching element 12L is connected to the end portion 12B. A gate terminal of each of the switching element 12H and the switching element 12L is connected to the control part 50. In addition, between the source terminal and the drain terminal of the switching element 12H and between the source terminal and the drain terminal of the switching element 12L, diodes 12HD and 12LD each having an anode terminal connected to the source terminal and a cathode terminal connected to the drain terminal are provided, respectively.

A capacitor 15 is provided across the terminal 10A and the terminal 10B of the inverter 10. The capacitor 15 smooths the DC voltage converted by the inverter 10.

In the reactor coil 30, one terminal 30B is connected to a first node 11N between the two switching elements (the switching element 11H and the switching element 11L) in the first leg 11. The first node 11N between the two switching elements in the first leg 11 is a line (for example, a wiring pattern of a substrate or a cable such as a harness) that connects the source terminal of the switching element 11H and the drain terminal of the switching element 11L. Of course, the first node 11N may be the source terminal of the switching element 11H or the drain terminal of the switching element 11L. The reactor coil 30 has two terminals 30A and 30B, and the terminal 30B is connected to the first node 11N.

AC power is supplied across the other terminal 30A of the reactor coil 30 and a second node 12N between the two switching elements (the switching element 12H and the switching element 12L) in the second leg 12. The second node 12N between the two switching elements in the second leg 12 is a line (for example, a wiring pattern of the substrate or a cable such as a harness) that connects the source terminal of the switching element 12H and the drain terminal of the switching element 12L. Of course, the second node 12N may be the source terminal of the switching element 12H or the drain terminal of the switching element 12L. The terminal 30A of the reactor coil 30 is connected to one terminal of a supply unit 2 to which AC power is supplied, and the other terminal of the supply unit 2 is connected to the second node 12N. Therefore, AC power supplied to the inverter 10 is generated by the switching element 11H and the switching element 11L of the first leg 11 and the switching element 12H and the switching element 12L of the second leg 12.

The converter 20 can convert DC power from the inverter 10 into DC power having a DC voltage of a first voltage value with which the battery 3 is chargeable, and can convert DC power from the battery 3 into DC power having a DC voltage of a second voltage value different from the first voltage value. The DC power from the inverter 10 is DC power output from the terminals 10A and 10B of the inverter 10. The battery 3 is a battery mounted on a vehicle to be charged by the power supply device 1, and is charged on the basis of DC power output from the converter 20. The battery 3 is charged with a DC voltage of an arbitrary voltage value, but the voltage value of the DC voltage constituting the DC power output from the inverter 10 is an arbitrary voltage value. The converter 20 converts the voltage value of the DC voltage output from the inverter 10 into an arbitrary DC voltage necessary for charging the battery 3.

In addition, the DC power from the battery 3 is DC power input from the battery 3 via the terminals 10A and 10B of the inverter 10. The voltage value of the DC voltage constituting the DC power from the battery 3 is about the same as the first voltage value (about several hundred V). In the present embodiment, the second voltage value is a DC voltage value equal to or larger than the voltage value of the AC voltage constituting the AC power output from the inverter 10. Therefore, the converter 20 converts the voltage value of the DC voltage input from the battery 3 into a DC voltage value equal to or larger than the voltage value of the AC voltage constituting the AC power output from the inverter 10, and outputs the DC voltage.

The converter 20 of the present embodiment includes a first conversion unit 21, a second conversion unit 22, and a transformer 24. In the present embodiment, an insulating transformer having a primary winding 24A and a secondary winding 24B is used as the transformer 24.

The first conversion unit 21 amplitudes the DC power from the inverter 10 at a predetermined cycle, and inputs the DC power to the primary winding 24A. The first conversion unit 21 includes a third leg 211 and a fourth leg 212, and the third leg 211 and the fourth leg 212 are provided in parallel to the terminals 10A and 10B. Therefore, one end portion 211A of the third leg 211 and one end portion 212A of the fourth leg 212 are connected to the terminal 10A, and the other end portion 211B of the third leg 211 and the other end portion 212B of the fourth leg 212 are connected to the terminal 10B.

The third leg 211 includes a high-side switching element 211H and a low-side switching element 211L connected in series. N-type MOS-FETs are used as the switching element 211H and the switching element 211L. In the switching element 211H, a drain terminal is connected to the end portion 211A, and a source terminal is connected to a drain terminal of the switching element 211L. A source terminal of the switching element 211L is connected to the end portion 211B. A gate terminal of each of the switching element 211H and the switching element 211L is connected to the control part 50. In addition, between the source terminal and the drain terminal of the switching element 211H and between the source terminal and the drain terminal of the switching element 211L, diodes 211HD and 211LD each having an anode terminal connected to the source terminal and a cathode terminal connected to the drain terminal are provided, respectively.

The fourth leg 212 includes a high-side switching element 212H and a low-side switching element 212L connected in series. N-type MOS-FETs are used as the switching element 212H and the switching element 212L. In the switching element 212H, a drain terminal is connected to the end portion 212A, and a source terminal is connected to a drain terminal of the switching element 212L. A source terminal of the switching element 212L is connected to the end portion 212B. A gate terminal of each of the switching element 212H and the switching element 212L is connected to the control part 50. In addition, between the source terminal and the drain terminal of the switching element 212H and between the source terminal and the drain terminal of the switching element 212L, diodes 212HD and 212LD each having an anode terminal connected to the source terminal and a cathode terminal connected to the drain terminal are provided, respectively.

The primary winding 24A is provided across a third node 211N between the two switching elements (the switching element 211H and the switching element 211L) in the third leg 211 and a fourth node 212N between the two switching elements (the switching element 212H and the switching element 212L) in the fourth leg 212. In the present embodiment, the winding start end of the primary winding 24 A is connected to the third node 211N, and the winding end end of the primary winding 24A is connected to the fourth node 212N.

A current (alternating current) corresponding to the turn ratio between the primary winding 24A and the secondary winding 24B flows through the secondary winding 24B, and a voltage (alternating voltage) corresponding to the turn ratio between the primary winding 24A and the secondary winding 24B is generated in the secondary winding 24B. The second conversion unit 22 rectifies the voltage (alternating voltage) generated in the secondary winding 24B. The second conversion unit 22 includes a fifth leg 221 and a sixth leg 222, and the fifth leg 221 and the sixth leg 222 are provided in parallel to terminals 20A and 20B of the converter 20. Therefore, one end portion 221A of the fifth leg 221 and one end portion 222A of the sixth leg 222 are connected to the terminal 20A, and the other end portion 221B of the fifth leg 221 and the other end portion 222B of the sixth leg 222 are connected to the terminal 20B.

The fifth leg 221 includes a high-side switching element 221H and a low-side switching element 221L connected in series. N-type MOS-FETs are used as the switching element 221H and the switching element 221L. In the switching element 221H, a drain terminal is connected to the end portion 221A, and a source terminal is connected to a drain terminal of the switching element 221L. A source terminal of the switching element 221L is connected to the end portion 221B. A gate terminal of each of the switching element 221H and the switching element 221L is connected to the control part 50. In addition, between the source terminal and the drain terminal of the switching element 221H and between the source terminal and the drain terminal of the switching element 221L, diodes 221HD and 221LD each having an anode terminal connected to the source terminal and a cathode terminal connected to the drain terminal are provided, respectively.

The sixth leg 222 includes a high-side switching element 222H and a low-side switching element 222L connected in series. N-type MOS-FETs are used as the switching element 222H and the switching element 222L. In the switching element 222H, a drain terminal is connected to the end portion 222A, and a source terminal is connected to a drain terminal of the switching element 222L. A source terminal of the switching element 222L is connected to the end portion 222B. A gate terminal of each of the switching element 222H and the switching element 222L is connected to the control part 50. In addition, between the source terminal and the drain terminal of the switching element 222H and between the source terminal and the drain terminal of the switching element 222L, diodes 222HD and 222LD each having an anode terminal connected to the source terminal and a cathode terminal connected to the drain terminal are provided, respectively.

The secondary winding 24B described above is provided across a fifth node 221N between the two switching elements (the switching element 221H and the switching element 221L) in the fifth leg 221 and a sixth node 222N between the two switching elements (the switching element 222H and the switching element 222L) in the sixth leg 222. In the present embodiment, the winding start end of the secondary winding 24B is connected to the fifth node 221N, and the winding end end of the secondary winding 24B is connected to the sixth node 222N.

A capacitor 25 is provided across the terminal 20A and the terminal 20B of the converter 20. The capacitor 25 smooths the DC voltage converted by the second conversion unit 22.

The switching part 40 switches the conversion operation of the inverter 10 and the converter 20. The conversion operation of the inverter 10 and the converter 20 corresponds to operation of converting AC power into DC power and operation of converting DC power into AC power, which are performed by each of the inverter 10 and the converter 20.

In the present embodiment, the converter 20 is switched from one of a first state and a second state to the other by the switching part 40. The first state is a state in which the converter 20 converts the DC power from the inverter 10 into DC power having a DC voltage of a first voltage value. The second state is a state in which the converter 20 converts the DC power from the battery 3 into DC power having a DC voltage of a second voltage value.

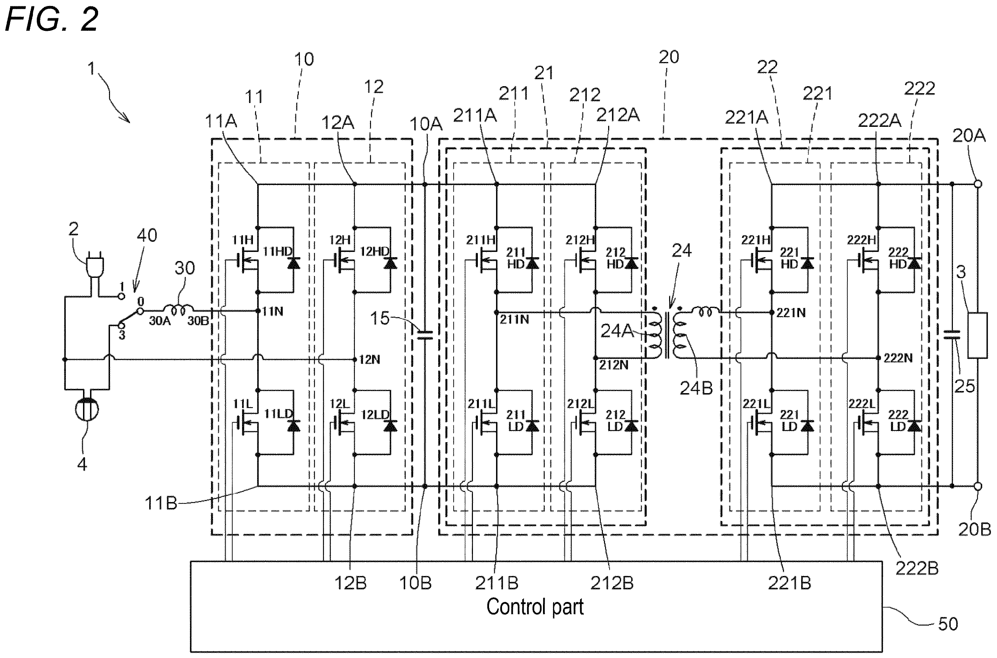

The switching part 40 can include a mechanism that can be manually operated by the user, and can include, for example, an alternate switch. As illustrated in FIG. 1, when the switching part 40 is operated to connect a terminal 0 and a terminal 1, AC power supplied from the supply unit 2 is input to the inverter 10 via the reactor coil 30. In addition, as illustrated in FIG. 2, when the switching part 40 is operated so as to connect the terminal 0 and a terminal 3, AC power generated on the basis of the DC power from the battery 3 can be taken out from the outlet 4 via the reactor coil 30.

Therefore, in a case where there is a charge request for charging the battery 3, the switching part 40 switches the converter 20 to the first state, and in a case where there is an output request for outputting AC power from the inverter 10 (in a case where the control part 50 makes an output request for outputting AC power from the inverter 10), the switching part 40 switches the converter 20 to the second state. That is, the switching part 40 switches the converter 20 to the first state in a case where the switching part 40 is operated to connect the terminal 0 and the terminal 1 as a charge request for charging the battery 3, and switches the converter 20 to the second state in a case where the switching part 40 is operated to connect the terminal 0 and a terminal 3 as an output request for outputting AC power from the inverter 10.

The control part 50 controls driving of the inverter 10. Specifically, the control part 50 alternately drives the switching element 11H and the switching element 11L of the first leg 11, and the switching element 12H and the switching element 12L of the second leg 12. As a result, the switching elements of the first leg 11 and the second leg 12 of the inverter 10 are driven to convert AC power into DC power.

Furthermore, the control part 50 controls driving of the converter 20. Specifically, the control part 50 alternately drives the switching element 211H of the third leg 211 and the switching element 212L of the fourth leg 212, and the switching element 211L of the third leg 211 and the switching element 212H of the fourth leg 212. As a result, DC power from the inverter 10 is amplified and input to the primary winding 24A, and AC power corresponding to the turn ratio between the primary winding 24A and the secondary winding 24B can be generated in the secondary winding 24B.

Moreover, the control part 50 alternately drives the switching element 221H of the fifth leg 221 and the switching element 222L of the sixth leg 222, and the switching element 221L of the fifth leg 221 and the switching element 222H of the sixth leg 222. As a result, the AC voltage generated in the secondary winding 24B is converted into a DC voltage. The battery 3 is charged with this DC voltage.

In addition, in a case where AC power is output from the outlet 4 by using the power charged in the battery 3, the control part 50 alternately drives the switching element 221H of the fifth leg 221 and the switching element 222L of the sixth leg 222, and the switching element 221L of the fifth leg 221 and the switching element 222H of the sixth leg 222. As a result, DC power from the battery 3 is amplified and input to the secondary winding 24B, and AC power corresponding to the turn ratio between the primary winding 24A and the secondary winding 24B can be generated in the primary winding 24A.

The control part 50 alternately drives the switching element 211H of the third leg 211 and the switching element 212L of the fourth leg 212, and the switching element 211L of the third leg 211 and the switching element 212H of the fourth leg 212. As a result, the AC voltage generated in the primary winding 24A is converted into a DC voltage. This DC voltage is a voltage obtained by transforming the output voltage of the battery 3 according to the turn ratio between the primary winding 24A and the secondary winding 24B.

Moreover, the control part 50 alternately drives the switching element 11H and the switching element 11L of the first leg 11, and the switching element 12H and the switching element 12L of the second leg 12. As a result, the switching elements of the first leg 11 and the second leg 12 are driven, and the DC voltage from the battery 3 is converted into AC power different from the AC power input to the inverter 10. That is, when the battery 3 is charged, an AC voltage of 200 V is applied to the inverter 10, but an AC voltage of 100 V can be output as an example from the power (DC power) charged in the battery 3.

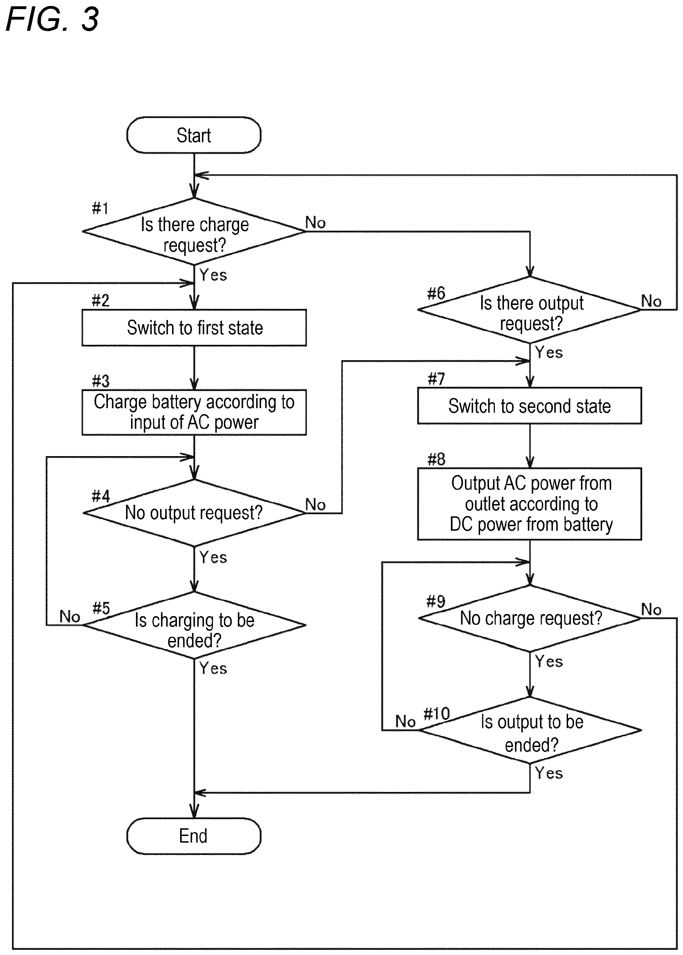

Next, the operation of the power supply device 1 will be described with reference to the flowchart of FIG. 3. In a case where there is a charge request to the switching part 40 (step #1: Yes), the state of the converter 20 is switched to the first state by the switching part 40 (step #2). In this case, the battery 3 is charged according to input of AC power to the supply unit 2 (step #3).

During charging of the battery 3, in a case where there is no request for outputting AC power by the operation of the switching part 40 (step #4: Yes) and charging of the battery 3 is not to be ended (step #5: No), the power supply device 1 continues charging of the battery 3. In contrast, in a case where there is no request for outputting AC power by the operation of the switching part 40 (step #4: Yes) and the charging of the battery 3 is to be ended (step #5: Yes), the power supply device 1 ends the charging of the battery 3.

In step #1, in a case where there is no charge request to the switching part 40 (step #1: No) and there is an output request (step #6: Yes), the state of the converter 20 is switched to the second state by the switching part 40 (step #7). In this case, AC power is output from the outlet 4 according to the DC power from the battery 3 (step #8).

When the AC power is output from the outlet 4, in a case where there is no request for charging the battery 3 by the operation of the switching part 40 (step #9: Yes), and the output of the AC power from the outlet 4 is not to be ended (step #10: No), the power supply device 1 continues supply of the AC power from the outlet 4. In contrast, in a case where there is no request for charging the battery 3 by the operation of the switching part 40 (step #9: Yes) and the output of the AC power is to be ended (step #10: Yes), the power supply device 1 ends the output of the AC power.

In step #4, when there is a request for outputting AC power from the outlet 4 during charging of the battery 3 (step #4: No), the process is continued from step #7. In addition, in step #9, when there is a request for charging the battery 3 while the AC power is being output from the outlet 4 (step #9: No), the process is continued from step #2.

### [Other embodiments]

In the above embodiment, it has been described that the switching elements included in the inverter 10 and the converter 20 are n-type MOS-FETs, but the switching elements may be p-type MOS-FETs or switching elements (for example, IGBTs or bipolar transistors) different from the FET.

In the above embodiment, it has been described that the inverter 10 and the converter 20 convert AC power into DC power by the switching elements, but the inverter 10 may be configured to convert AC power into DC power by diodes.

In the above embodiment, it has been described that the switching part 40 includes an alternate switch, but the switching part 40 may be configured to switch by, for example, operating an icon displayed on a display device, or may be configured to detect at least one of supply of AC power to the supply unit 2 or connection of an AC load to the outlet 4 to switch the conversion operation.

In the above embodiment, it has been described that the switching part 40 can include an alternate switch, but may include a relay. Furthermore, the switching part 40 may be a software switch that switches the operation (operation mode) of the inverter 10 and the converter 20 at a software level.

### [Outline of embodiment described above]

Hereinafter, an outline of the power supply device 1 described above will be described.

(1) A characteristic configuration of the power supply device 1 according to the present invention includes: the inverter 10 that, in a case where AC power is input, converts the AC power into DC power and outputs the DC power, and in a case where DC power is input, converts the DC power into AC power and outputs the AC power; the converter 20 that allows the DC power from the inverter 10 to be converted into DC power having a DC voltage of a first voltage value with which the battery 3 is chargeable, and allows DC power from the battery 3 to be converted into DC power having a DC voltage of a second voltage value different from the first voltage value; and the switching part 40 that switches conversion operation of the inverter 10 and the converter 20.
   According to the present characteristic configuration, the battery 3 can be charged by the power supply device 1 via the inverter 10, and in a case where the battery 3 is not charged, AC power can be output on the basis of the DC power from the battery 3. Therefore, since the inverter 10 and the converter 20 can be used in combination when the battery 3 is charged and when AC power is output on the basis of the DC power from the battery 3, the size can be reduced as compared with a case where the inverter 10 and the converter 20 are not used in combination, and it is possible to realize the power supply device 1 at low cost.
(2) In the power supply device 1 described in (1), in a case where a state in which the converter 20 converts the DC power from the inverter 10 into DC power having the DC voltage of the first voltage value is a first state and a state in which the converter 20 converts the DC power from the battery 3 into DC power having the DC voltage of the second voltage value is a second state, the switching part 40 preferably switches from one of the first state and the second state to the other of the first state and the second state.
   When charging the battery 3, the converter 20 needs to convert the voltage value of the DC voltage constituting the input DC power into a voltage value of a DC voltage suitable for charging the battery 3. When outputting AC power on the basis of the DC power from the battery 3, the converter 20 needs to convert the voltage value of the DC voltage constituting the DC power from the battery 3 into a DC voltage value equal to or larger than the voltage value of the AC voltage constituting the AC power output from the inverter 10. Therefore, with the above configuration, the operation of the converter 20 can be easily switched between when the battery 3 is charged and when AC power is output on the basis of the DC power from the battery 3.
(3) In the power supply device 1 according to (2), in a case where there is a charge request for charging the battery 3, the switching part 40 preferably switches the converter 20 to the first state.
   According to the configuration, the power supply device 1 can charge the battery 3 on the basis of the DC power generated by the converter 20.
(4) The power supply device 1 according to (2) further includes the control part 50 that controls driving of the inverter 10 and the converter 20, and the switching part 40 preferably switches the converter 20 to the second state in a case where the control part 50 makes an output request for outputting AC power from the inverter 10.
   According to the present configuration, the power supply device 1 can output AC power from the inverter 10 on the basis of the DC power generated by the converter 20.
(5) In the power supply device 1 according to (1) to (4), the switching part 40 is preferably a mechanism that allows a user to manually operate the mechanism.
   According to the present configuration, it is possible to switch between charging of the battery 3 and discharging from the battery 3 (output of DC power) according to an intention of the user.
(6) The power supply device 1 according to (1) to (4) further includes: the supply unit 2 that supplies the AC power input to the inverter 10; and the outlet 4 that outputs AC power by using the DC power from the battery 3, and the switching part 40 is allowed to be configured to detect at least one of supply of the AC power to the supply unit 2 or connection of an AC load to the outlet 4 to switch the conversion operation.

According to the present configuration, in a case where at least one of the supply of the AC power to the supply unit 2 or the connection of the AC load to the outlet 4 is detected, it is possible to automatically switch between charging of the battery 3 and discharging from the battery 3 (output of DC power). Note that the supply of the AC power to the supply unit 2 and the connection of the AC load to the outlet 4 may be detected by, for example, a detection mechanism (not illustrated) that physically detects the connection of the supply unit 2 to a portion to which the AC load is supplied (not illustrated) and the connection of a connection portion (not illustrated) of the AC load to the outlet 4, or may be detected by a sensor unit (not illustrated) that electrically detects the connection.

### [Industrial applicability]

The present invention can be used for a power supply device that charges and discharges a battery mounted on a vehicle.

### REFERENCE SIGNS LIST

1: Power supply device, 2: Supply unit, 3: Battery, 4: Outlet, 10: Inverter, 20: Converter, 40: Switching part, and 50: Control part

## Claims

1. A power supply device comprising:
an inverter that, in a case where AC power is input, converts the AC power into DC power and outputs the DC power, and in a case where DC power is input, converts the DC power into AC power and outputs the AC power;
a converter that allows the DC power from the inverter to be converted into DC power having a DC voltage of a first voltage value with which a battery is chargeable, and allows DC power from the battery to be converted into DC power having a DC voltage of a second voltage value different from the first voltage value; and
a switching part that switches conversion operation of the inverter and the converter.

2. The power supply device according to claim 1, wherein in a case where a state in which the converter converts the DC power from the inverter into DC power having the DC voltage of the first voltage value is a first state and a state in which the converter converts the DC power from the battery into DC power having the DC voltage of the second voltage value is a second state, the switching part switches from one of the first state and the second state to another of the first state and the second state.

3. The power supply device according to claim 2, wherein in a case where there is a charge request for charging the battery, the switching part switches the converter to the first state.

4. The power supply device according to claim 2 further comprising:
a control part that controls driving of the inverter and the converter,
wherein the switching part switches the converter to the second state in a case where the control part makes an output request for outputting the AC power from the inverter.

5. The power supply device according to any one of claims 1 to 4, wherein the switching part is a mechanism that allows a user to manually operate the mechanism.

6. The power supply device according to any one of claims 1 to 4 further comprising:
a supply unit that supplies the AC power input to the inverter; and
an outlet that outputs AC power by using the DC power from the battery,
wherein the switching part detects at least one of supply of the AC power to the supply unit or connection of an AC load to the outlet to switch the conversion operation.
